# EUROPEAN PATENT SPECIFICATION

(11) **EP 1 067 308 B1**
(45) Date of publication and mention of the grant of the patent: **06.10.2004**
(21) Application number: 00112071.6
(22) Date of filing: 05.06.2000
(51) Int. Cl.: F16F 9/12

(54) **Gear damper, rotating mechanism provided with gear damper and recorded information reproducing apparatus provided with rotating mechanism**
Getriebedämpfer, Rotationsmechanismus mit Getriebedämpfer und gespeicherte Informationswiedergabevorrichtung mit Rotationsmechanismus
Amortisseur à engrenage, mécanisme rotatif avec amortisseur à engrenage et dispositif de reproduction d'information stockée avec mécanisme rotatif

(30) Priority: 07.06.1999 JP 16025999; 21.09.1999 JP 26782299
(43) Date of publication of application: 10.01.2001
(73) Proprietor: ENPLAS CORPORATION, Kawaguchi-shi, Saitama 250-0023 (JP)
(72) Inventor: Baba, Yuzaburo, c/o Enplas Corporation, Kawaguchi-shi, Saitama 250-0023 (JP)
(74) Representative: Manitz, Finsterwald & Partner GbR

(56) References cited:
- EP-A- 0 763 671
- US-A- 4 691 589
- PATENT ABSTRACTS OF JAPAN vol. 1998, no. 13, 30 November 1998 (1998-11-30) -& JP 10 213165 A (KOYO FASTENER KK), 11 August 1998 (1998-08-11)

## Description

### BACKGROUND OF THE INVENTION

### FIELD OF THE INVENTION

The present invention relates to a gear damper connected to a rotating member, absorbing a rotational energy of the rotating member - due to a viscosity resistance of an oil to smoothen and gentle an operation of the rotating member, a rotating mechanism having the gear damper as a constituting part, and a recorded information reproducing apparatus such as a cassette tape recorder, a compact disc player or the like having the rotational mechanism as a constituting element.

### DESCRIPTION OF THE PRIOR ART

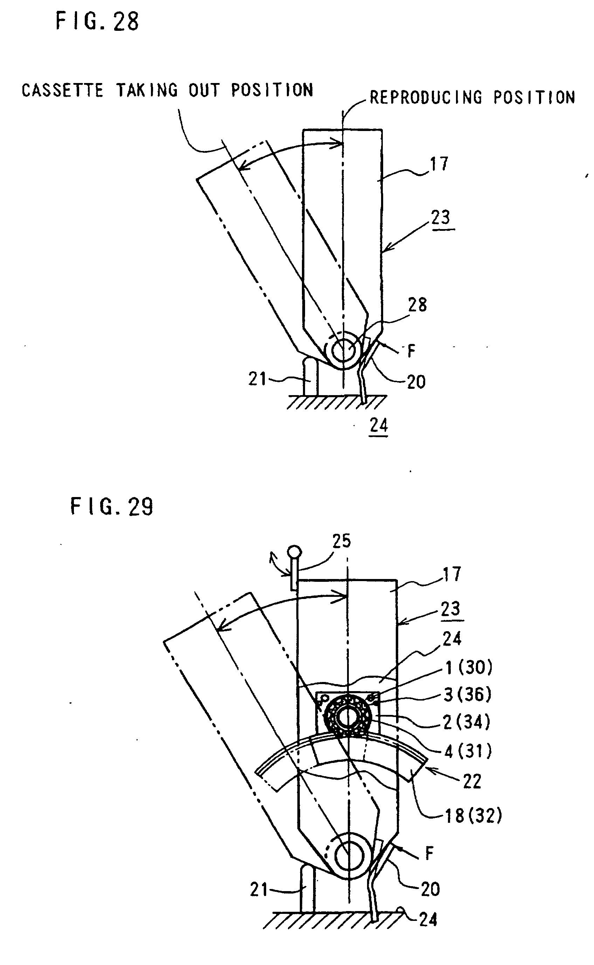

For example, a cassette holder 17 for receiving a cassette tape of a cassette tape recorder 23 as shown in Fig. 28 is structured such as to be rotatably mounted to a cassette tape recorder main body 24 via a supporting shaft 28, be locked to the cassette tape recorder main body 24 at a time of reproducing, and be urged by a spring force F of a spring member (an elastic member) 20 so as to be rotated to a cassette taking-out position when the lock is cancelled at a time of taking out the cassette tape. Since the cassette holder 17 is rotated and urged by the spring force F of the spring member 20 and the cassette holder 17 is strongly collided with a stopper 21 and stops when the cassette tape is taken out, an impact sound is generated and a vibration is generated.

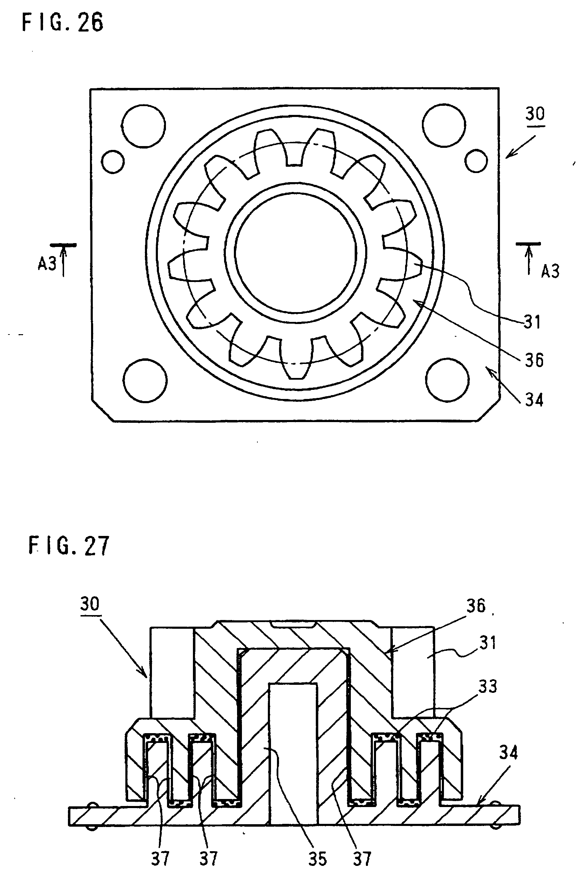

Then, in order to solve the trouble mentioned above, as shown in Fig. 29, there is proposed a structure made such that a gear damper 30 shown in Figs. 26 and 27 is mounted to the cassette tape recorder main body 24 and a fan gear 32 engaging with a spur gear corresponding to an embodiment of a gear provided in the gear damper 30 is fixed to the cassette holder 17, whereby a rotational energy of the cassette holder 17 is absorbed by a viscosity resistance of an oil 33 within the gear damper 30 and the cassette holder 17 is smoothly and gently operated.

Here, the gear damper 30 shown in Figs. 26 and 27 is provided with a bracket 34 fixed to the cassette tape recorder main body 24 and a rotating body 36 rotatably engaged with a supporting shaft 36 of the bracket 24, an annular gap 37 for charging the oil (a silicone grease or the like) 33 having a high viscosity is formed between the bracket 34 and the rotating body 36, and the spur gear 31 engaging with the fan gear 32 of the cassette holder 17 is formed on an outer periphery of the rotating body 36.

Then, the rotating body 36 provided with the spur gear 31 engaging with the fan gear 32 is rotated when the cassette holder 17 is rotated as shown in Fig. 29, whereby the viscosity resistance of the oil is applied to the rotating body 36. Accordingly, the gear damper 30 can absorb the rotational energy of the cassette holder 17.

In the gear damper 39 mentioned above, since the gear formed in the rotating body 36 is the spur gear 31, a force (a thrust force) hardly is applied in a direction of taking out the rotating body 36 from the supporting shaft 35 of the bracket 34, however, it has been pointed out that there is a risk that the rotating body 36 is taken out from the supporting shaft 35 due to an influence of vibration or the like as repeating opening and closing operations of the cassette holder 17.

Furthermore, document JP10213165 discloses
a gear damper comprising a rotating body having a gear formed on an outer periphery thereof and a bracket rotatably supporting the rotating body, wherein a viscosity resistance of an oil interposed between said rotating body and said bracket is applied to said rotating body, wherein
a supporting shaft extending toward one of said rotating body and said bracket is formed in the other thereof,
a cylindrical bearing hole with a bottom engaged with said supporting shaft so as to be relatively rotatable is formed in said one of said rotating body and said bracket,
an annular groove having the same axis as that of said bearing hole is formed on a surface of one of said rotating body and said bracket confronting the other, and an annular cylinder portion
engaged with said annular groove so as to be relatively rotatable is formed in the other of said rotating body and said bracket in such a manner as to have the same axis as that of said supporting shaft,
and the oil is interposed in a gap (19a, 19b) between said annular groove and said annular cylinder portion, in a gap between said bearing hole and said supporting shaft.

### SUMMARY OF THE INVENTION

Accordingly, an object of the present invention is to provide a gear damper structured such as to prevent a rotating body from being easily taken out from a bracket, a rotating mechanism provided with the gear damper, and a recorded information reproducing apparatus such as a cassette taper recorder, a compact disc player or the like provided with the rotating mechanism.

In accordance with the present invention, there is provided a gear damper comprising a rotating body having a gear formed on an outer periphery thereof and a bracket rotatably supporting the rotating body, wherein a viscosity resistance of an oil interposed between the rotating body and the bracket is applied to the rotating body. In this structure, a supporting shaft extending toward one of the rotating body and the bracket is formed in the other thereof, and a cylindrical bearing hole with a bottom engaged with the supporting shaft so as to be relatively rotatable is formed in the one of the rotating body and the bracket. Further, an annular groove having the same axis as that of the bearing hole is formed on a surface of one of the rotating body and the bracket confronting the other, and an annular cylinder portion engaged with the annular groove so as to be relatively rotatable is formed in the other of the rotating body and the bracket in such a manner as to have the same axis as that of the supporting shaft. Further, an oil reserving recess portion is formed in at least one of a front end surface of the supporting shaft and a bottom surface of the bearing hole confronting the front end surface. Then, the oil is interposed in a gap between the annular groove and the annular cylinder portion, in a gap between the bearing hole and the supporting shaft and in the oil reserving recess portion.

In accordance with the present invention having the structure mentioned above, since the front end surface of the supporting shaft and the bottom surface of the bearing hole are apart from each other when the rotating body slightly moves in a direction of being taken out from the bracket, the oil charged within the oil reserving recess portion is attracted by the bottom surface of the bearing hole so as to be deformed, and a deformation resistance of the oil is applied to the rotating body. Further, as mentioned above, since a space in a vacuum condition is generated between the bottom surface of the bearing hole and the front end surface of the supporting shaft when the oil is attracted by the bottom surface of the bearing hole so as to be deformed, a pressure difference is generated between an outer surface of the rotating body and an inner portion of the bearing hole, and the rotating body is attracted to the bracket side due to the pressure difference. Accordingly, in accordance with the present invention, it is possible to effectively prevent the rotating body from being taken out from the bracket due to a synergistic effect of the deformation resistance of the oil and the pressure difference between the outer surface of the rotating body and the inner portion of the bearing. In addition, in accordance with the present invention, it is possible to supplement the oil charged in the oil reserving recess portion to the gap between the supporting shaft and the bearing hole.

Further, in accordance with a first aspect of the present invention, there is provided a gear damper as recited in the first aspect, in which an oil reserving recess portion is formed in at least one of a front end surface of the annular cylinder portion and a bottom surface of the annular groove confronting the front end surface, and an oil is received in the oil reserving recess portion.

In accordance with the present invention having the structure mentioned above, since a deformation resistance of the oil within the oil reserving recess portion formed in at least one of the front end surface of the supporting shaft of the bracket and the bottom surface of the bearing hole confronting the front end surface is applied to the rotating body and a deformation resistance of the oil within the oil reserving recess portion formed in at least one of the front end surface of the annular cylinder portion and the bottom surface of the annular groove confronting the front end surface is applied to the rotating body, the force for attracting the rotating body to the bracket side becomes greater than that of the gear damper described in the first aspect mentioned above, so that it is possible to more effectively prevent the rotating body from being taken out. Further, in accordance with the gear damper of the present invention, since the oil is supplemented to the gap between the annular cylinder portion and the annular groove from the oil reserving recess portion formed in at least one of the front end surface of the annular cylinder portion and the bottom surface of the annular groove confronting the front end surface, it is possible to more securely obtain a damper function as well as the effect of the gear damper described in the first aspect mentioned above

Further, in accordance with a second aspect of the present invention, there is provided a gear damper as recited in the first aspect or the second aspect, in which an outer cylindrical portion is formed on an outermost periphery of a surface confronting the bracket of the rotating body in such a manner as to have the same axis as that of the bearing hole, and a standing wall engaged with the outer cylindrical portion in such a manner as to be relatively rotatable is formed on an outer side of the annular cylinder portion of the bracket. Then, an engaging convex portion is formed in one of the outer cylindrical portion and the standing wall, and an engaging recess portion engaging with the engaging convex portion is formed in the other of the outer cylindrical portion and the standing wall.

In accordance with the present invention having the structure mentioned above, it is possible to assemble the rotating body in the bracket in such a manner as to be rotatable by engaging the engaging convex portion formed in one of the outer cylindrical portion and the standing wall with the engaging recess portion formed in the other of the outer cylindrical portion and the standing wall. As a result, even when the force is applied in a direction of separating the bracket from the bracket, a movement of the rotating body can be prevented by the engaging portion between the engaging convex portion and the engaging recess portion. Further, the engaging portion between the engaging convex portion and the engaging recess portion prevents the oil interposed in the gap between the annular groove and the annular cylinder portion, in the gap between the bearing hole and the supporting shaft and in the oil reserving recess portion from leaking out.

Further, in accordance with a third aspect of the present invention, there is provided a gear damper as recited in the first aspect or the second aspect, in which an engaging convex portion is formed in one of the annular groove and a confronting surface of the annular cylinder portion, and an engaging recess portion engaging with the engaging convex portion is formed in the other of the annular groove and the confronting surface of the annular cylinder portion.

In accordance with the present invention having the structure mentioned above, it is, of course, possible to prevent the rotating body from being taken out from the bracket, and the standing wall in the gear damper described in the third aspect is not required to be independently formed. Accordingly, the structure of the gear damper is made simple.

Further, in accordance with a fourth aspect of the present invention, there is provided a gear damper as recited in the first aspect or the second aspect, in which an engaging convex portion is formed in one of an outer peripheral surface of the supporting shaft and an inner peripheral surface of the bearing hole, and an engaging recess portion engaging with the engaging convex portion is formed in the other of the outer peripheral surface of the supporting shaft and the inner peripheral surface of the bearing hole.

In accordance with the present invention having the structure mentioned above, in the same manner as the gear damper as recited in the fourth aspect, it is, of course, possible to prevent the rotating body from being taken out from the bracket, and it is possible to intend to make the structure of the gear damper simple.

Further, in accordance with a fifth aspect of the present invention, there is provided a gear damper as recited in the first aspect or the second aspect, in which an oil reserving groove is formed in outer side of the annular cylinder portion of the bracket.

In accordance with the present invention having the structure mentioned above, it is possible to receive the leaking oil within the oil reserving groove even when the oil charged between the rotating body and the bracket is leaked out to an external portion, so that a periphery of the gear damper is not soiled by the leaking oil.

Further, in accordance with a sixth aspect of the present invention, there is provided a gear damper as recited in any one of the first to sixth aspects, in which the gear is a spur gear.

In accordance with the present invention having the structure mentioned above, since the gear formed in the rotating body is the spur gear, it is possible to prevent a thrust force from applied to the rotating body.

Further, in accordance with an seventh aspect of the present invention, there is provided a gear damper as recited in any one of the first to sixth aspects, in which the gear is provided with teeth generating a thrust force for pressing the rotating body toward the bracket side.

In accordance with the present invention having the structure mentioned above, the thrust force generated by the teeth of the gear is applied in a direction of preventing the rotating body from being taken out from the bracket.

Further, in accordance with a eighth aspect of the present invention, there is provided a rotating mechanism comprising a rotating member rotatably supported to a fixed side supporting portion, lock means for locking the rotating member at a predetermined position, an elastic member for constantly urging the rotating member in a fixed direction, a stopper for restricting an amount of rotation of the rotating member rotated due to an elastic force of the elastic member, the gear damper as recited in any one of the aspects mentioned above and structured such that the bracket is fixed to one of the fixed side supporting portion and the rotating member, and a gear fixed to the other of the fixed side supporting portion and the rotating member and engaging with the gear of the gear damper.

The rotating mechanism having the structure mentioned above can absorb a rotational energy of the rotating member urged by the elastic member so as to rotate by a viscosity resistance of the oil, and can smoothen and gentle an operation of the rotating member. As a result, an impact sound between the rotating member and the stopper can be restricted, and it is possible to reduce a vibration caused by the collision between the rotating member and the stopper. Further, since the rotating mechanism in accordance with the present invention is provided with the gear damper as described in any one of the first to sixth aspects, it is possible to effectively prevent the rotating body of the gear damper and the bracket from being taken out even when repeatedly operating the gear damper, so that the rotating mechanism can be securely operated for a long time.

Further, in accordance with a ninth aspect of the present invention, there is provided a recorded information reproducing apparatus comprising the rotating mechanism as recited in the ninth aspect and reproducing means for reproducing recorded information from a recorded medium attached to the rotating member of the rotating mechanism.

In accordance with the present invention having the structure mentioned above, since the rotating body of the gear damper constituting the rotating mechanism and the bracket are not taken out and the gear damper constituting the rotating mechanism does not generate an inferior operation even when operating the rotating mechanism for a long time, it is possible to securely reproduce the recorded information for a long time and it is possible to improve a reliability with respect to the present apparatus. In this case, the recording medium means a structure which can record information such as a cassette tape, a compact disc and the like.

### BRIEF DESCRIPTION OF THE DRAWINGS

Fig. 1 is an exploded perspective view of a gear damper in accordance with a first embodiment of the present invention;
Fig. 2 is a perspective view as seen from a back surface side which shows a rotating body of the gear damper;
Fig. 3 is a perspective view of an outer appearance of the gear damper;
Fig. 4 is a plan view of the gear damper;
Fig. 5 is a vertical cross sectional view of the gear damper (a cross sectional view taken along a line A1-A1 in Fig. 4);
Fig. 6 is a vertical cross sectional view which shows the gear damper in an exploded manner;
Fig. 7 is an enlarged cross sectional view which shows an engaging portion between a rotating body of the gear damper and a bracket;
Fig. 8 is a vertical cross sectional view of a gear damper in accordance with a second embodiment of the present invention;
Fig. 9 is a view which shows an operating state of the gear damper;
Fig. 10 is a plan view of a gear damper in accordance with a third embodiment of the present invention;
Fig. 11 is a vertical cross sectional view of the gear damper (a cross sectional view taken along a line A2-A2 in Fig. 10);
Fig. 12 is a vertical cross sectional view of a gear damper in accordance with a fourth embodiment of the present invention;
Fig. 13 is a vertical cross sectional view of a gear damper in accordance with a fifth embodiment of the present invention;
Fig. 14 is a vertical cross sectional view of a gear damper in accordance with a sixth embodiment of the present invention;
Figs. 15A and 15B are a top elevational view which shows a state of omitting a left half of a bracket in accordance with the sixth embodiment of the present invention, in which Fig. 15A is a view showing a first embodiment of an oil reserving recess portion in an annular cylinder portion and Fig. 15B is a view showing a second embodiment of the oil reserving recess portion in the annular cylinder portion;
Fig. 16 is a vertical cross sectional view of a gear damper in accordance with a seventh embodiment of the present invention;
Figs. 17A and 17B are a bottom elevational view which shows a state of omitting a left half of a rotating body in accordance with the seventh embodiment of the present invention, in which Fig. 17A is a view showing a first embodiment of an oil reserving recess portion in an annular groove and Fig. 17B is a view showing a second embodiment of the oil reserving recess portion in the annular groove;
Fig. 18 is a vertical cross sectional view of a gear damper in accordance with an eighth embodiment of the present invention;
Fig. 19 is a vertical cross sectional view showing a first embodiment of a gear damper in accordance with a ninth embodiment of the present invention;
Fig. 20 is a vertical cross sectional view showing a second embodiment of the gear damper in accordance with the ninth embodiment of the present invention;
Fig. 21 is a vertical cross sectional view of a gear damper showing a first embodiment of in accordance with another embodiment of the present invention;
Fig. 22 is a partly enlarged view of a gear damper showing a second embodiment of in accordance with another embodiment of the present invention;
Fig. 23 is a partly enlarged view of a gear damper showing a third embodiment of in accordance with another embodiment of the present invention;
Fig. 24 is a partly enlarged view of a gear damper showing a fourth embodiment of in accordance with another embodiment of the present invention;
Fig. 25 is a vertical cross sectional view of a gear damper showing a fifth embodiment of in accordance with another embodiment of the present invention;
Fig. 26 is a plan view of a conventional gear damper;
Fig. 27 is a vertical cross sectional view of the gear damper (a cross sectional view taken along a line A3-A3 in Fig. 16);
Fig. 28 is a schematic view of a conventional rotating mechanism; and
Fig. 29 is a schematic view of a rotating mechanism to which a gear damper is mounted.

### DESCRIPTION OF THE PREFERRED EMBODIMENTS

A description will be in detail given below of an embodiment of the present invention with reference to the accompanying drawings.

### [First Embodiment]

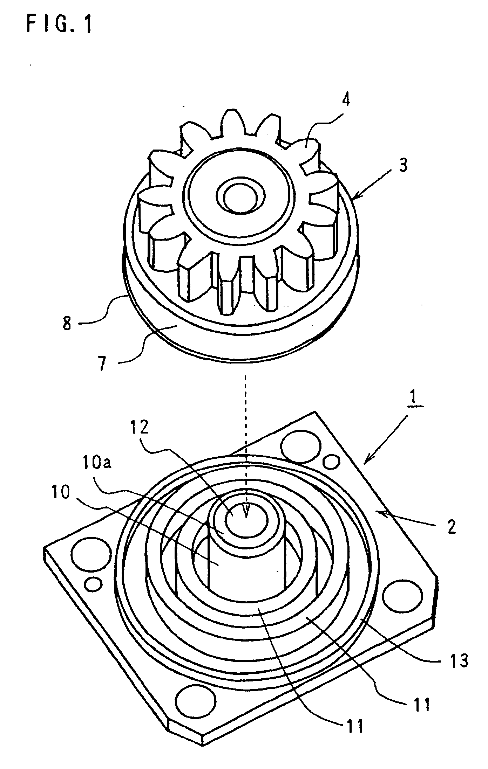

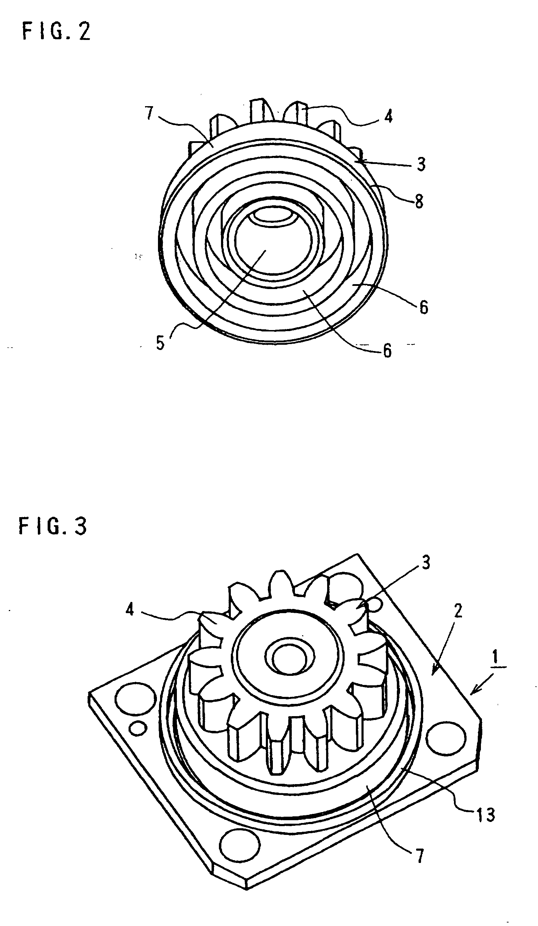

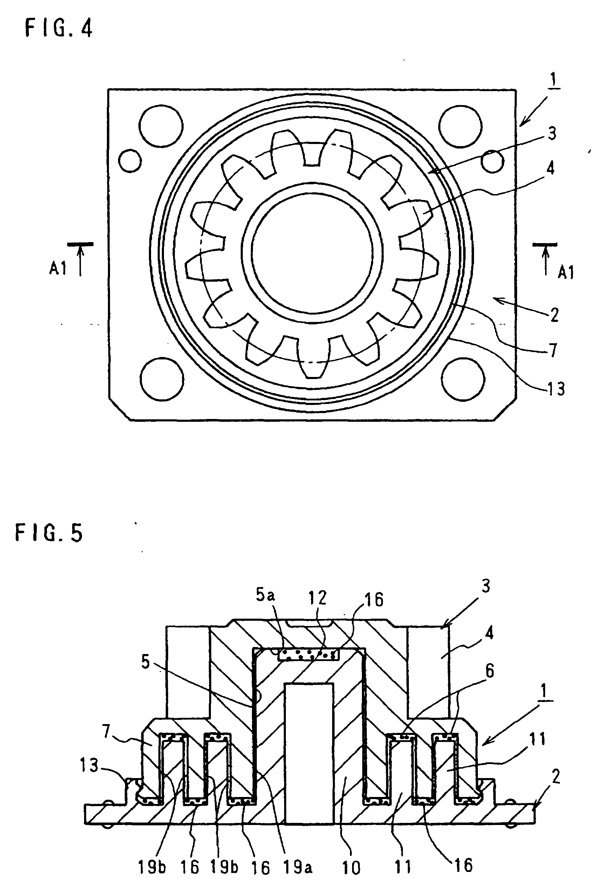

Figs. 1 to 6 show a gear damper 1 in accordance with a first embodiment of the present invention. As shown in these drawings, the gear damper 1 is provided with a bracket 2 and a rotating body 3 assembled in the bracket 2 in such a manner as to relatively rotate. In this case, the bracket 2 and the rotating body 3 are both formed in a desired shape by injection molding a synthetic resin.

The rotating body 3 is structured such that a spur gear 4 is formed in an outer peripheral side of an upper portion thereof. Then, a cylindrical bearing hole 5 with a bottom is formed in a center portion of a bottom surface (a lower surface) 3a of the rotating body 3, and a plurality of annular grooves 6 having the same axis as that of the bearing hole 5 are formed in an outer peripheral side of the bearing hole 5. Further, an outer cylindrical portion 7 is formed below the rotating body 3, and an annular engaging convex portion 8 is formed in an outer peripheral end thereof.

In the bracket 2, a supporting shaft 10 fitted to the bearing hole 5 of the rotating body 3 in such a manner as to relatively rotate is formed, and a plurality of annular cylinder portions 11 having the same axis as that of the supporting shaft 10 are formed in an outer peripheral side of the supporting shaft 10. Then, the supporting shaft 10 of the bracket 2 is formed so as to have a thickness at which a predetermined gap is generated between the supporting shaft 10 and the bearing hole 5 of the rotating body 3, and a oil reserving recess portion 12 is formed on a front end surface 10a brought into contact with a bottom surface 5a of the bearing hole 5. Further, the annular cylinder portions 11 of the bracket 2 are structured such as to be engaged with the annular groove 6 of the rotating body 3 in such a manner as to relatively rotate, and are formed so that a predetermined gap is generated with respect to wall surfaces 6a of the annular groove 6. Then, an annular standing wall 13 having the same axis as that of the supporting shaft 10 is formed in an outer side of the annular cylinder portion 11. The standing wall 13 is formed so as to have a height lower than that of the annular cylinder portion 11, and is structured such that an engaging recess portion 14 engaging with an engaging convex portion 8 of the rotating body 3 is formed on an inner peripheral surface thereof. In this case, the engaging recess portion 14 is positioned below an annular projection portion 15 formed on the inner peripheral surface of the standing wall 13, and is engaged with the engaging convex portion 8 of the rotating body 3 riding over the annular projection portion 15 at a time of assembling the rotating body 3 in the bracket 2.

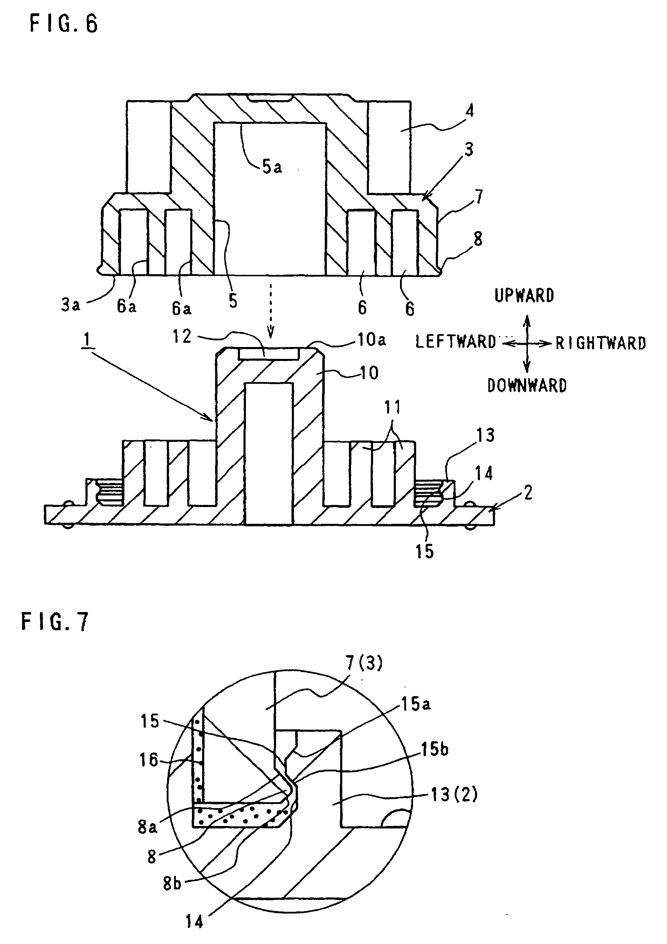

Fig. 7 is a view which shows an engaging state between the engaging convex portion 8 of the rotating body 3 and the engaging recess portion 14 of the bracket 2. As shown in Fig. 7, inclined surface portions 8a and 8b are formed in both of upper and lower ends of the engaging convex portion 8, and inclined surface portions 15a and 15b are formed in both of upper and lower ends of the annular projection portion 15. In this case, in order to smoothly engage the engaging convex portion 8 with the engaging recess portion 14, at least one of the standing wall 13 and the outer cylindrical portion 7 is required to be elastically deformed. In accordance with the structure mentioned above, it is possible to smoothly assemble and dissemble the rotating body 3 and the bracket 2.

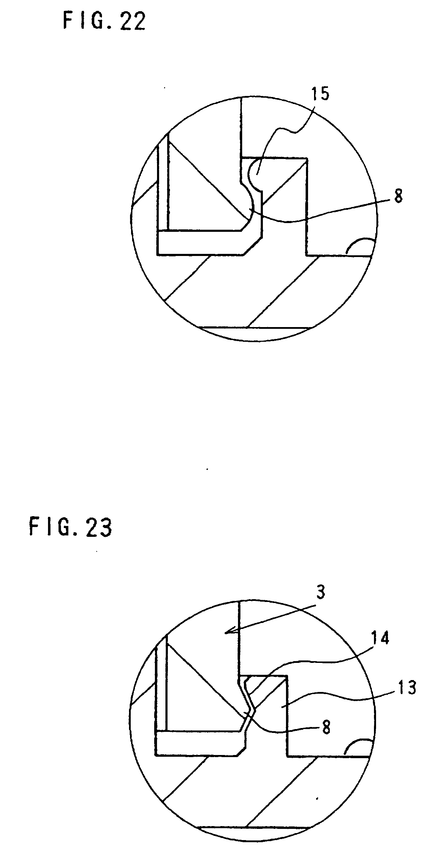

In this case, an oil 16 having a high viscosity such as a silicone grease or the like is charged in a gap 19a between the supporting shaft 10 and the bearing hole 5, a gap 19b between the annular cylinder portion 11 and the annular groove 6 and the oil reserving recess portion 12. Accordingly, when the rotating body 3 rotates with respect to the bracket 2, a viscosity resistance of the oil 16 is applied to the rotating body 3. As a result, for example, as shown in Fig. 29, in the case that the spur gear 4 of the rotating body 3 in the gear damper 1 is engaged with a fan gear 18 of a cassette holder (a rotating member) 17, it is possible to absorb a rotational energy of the cassette holder 17 urged by a spring member by the viscosity resistance of the oil applied to the rotating body 3 and it is possible to smoothly and gently operate the cassette holder 17. Accordingly, an impact force generated at a time when the cassette holder 17 is brought into contact with the stopper 21 so as to stop becomes significantly smaller than that of the conventional embodiment using no gear damper 1, and it is possible to effectively prevent the impact sound and the vibration from being generated. In this case, a rotating mechanism 22 shown in Fig. 22 is applied to the cassette holder 17 of a cassette tape recorder (a recorded information reproducing apparatus) 23, and the structure is made such that the bracket 2 of the gear damper 1 is fixed to a cassette tape recorder main body (a fixed side supporting portion) 24, lock means 25 holds the cassette holder 17 at a reproducing position, and the cassette holder 17 rotates due to a spring force F of the spring member 20 when canceling the lock means 25. In this case, the spring member 20 is structured such that one end thereof is fixed to the cassette tape recorder main body 24 side and the other end thereof presses the cassette holder 17 in a counterclockwise direction in the drawing. In this case, the cassette tape recorder 23 shown in Fig. 29 is structured such as to reproduce recorded information of a cassette tape (a recording medium) (not shown) attached to the cassette holder 17 by means of reproducing means (not shown) at a reproducing position.

In accordance with the present embodiment structured in the manner mentioned above, the oil charged within the oil reserving recess portion 12 is attracted by the bottom surface 5a of the bearing hole 5 so as to be deformed, a space in a vacuum state is generated between the bottom surface 5a of the bearing hole 5 and the front end surface 10a of the supporting shaft 10, whereby a pressure difference is generated between an outer surface of the rotating body 3 and an inner portion of the bearing hole 5. Accordingly, the rotating body 3 is not taken out from the bracket 2 so as to generate an inferior operation in accordance with a synergistic effect of a matter that the rotating body 3 is attracted close to the bracket 2 side due to the pressure difference and a matter that the engaging convex portion 8 of the rotating body 3 and the engaging recess portion 14 of the bracket 2 are engaged, even when a force (a thrust force) in a direction of taking out the rotating body 3 from the bracket 2 is applied. Therefore, the gear damper 1 in accordance with the present embodiment can absorb the rotational energy applied to the rotating body 3 by the viscosity resistance of the oil 16 whatever aspect the gear damper 1 is used in.

Further, the gear damper 1 in accordance with the present embodiment can supply the oil 16 from the oil reserving recess portion 12 in the case that the oil 16 in the gap 19a between the supporting shaft 10 and the bearing hole 5 is insufficient since the oil 16 is charged in the oil reserving recess portion 12 formed on the front end surface 10a of the supporting shaft 10 of the bracket 2. As a result, the gear damper 1 in accordance with the present embodiment can securely apply the viscosity resistance of the oil 16 to the rotating body 3 in comparison with the aspect in which the oil reserving recess portion 12 is not formed, so that it is possible to improve a reliability with respect to the gear damper 1. In this case, the gaps 19a and 19b are set to be optimum sizes with taking into consideration a viscosity of an oil and the other design conditions. Further, in the present embodiment, the structure is not limited to the fan gear 18 as far as it can guide rotation of the spur gear 4, and a gear such as a spur gear or the like may be optionally used as modification.

### [Second Embodiment]

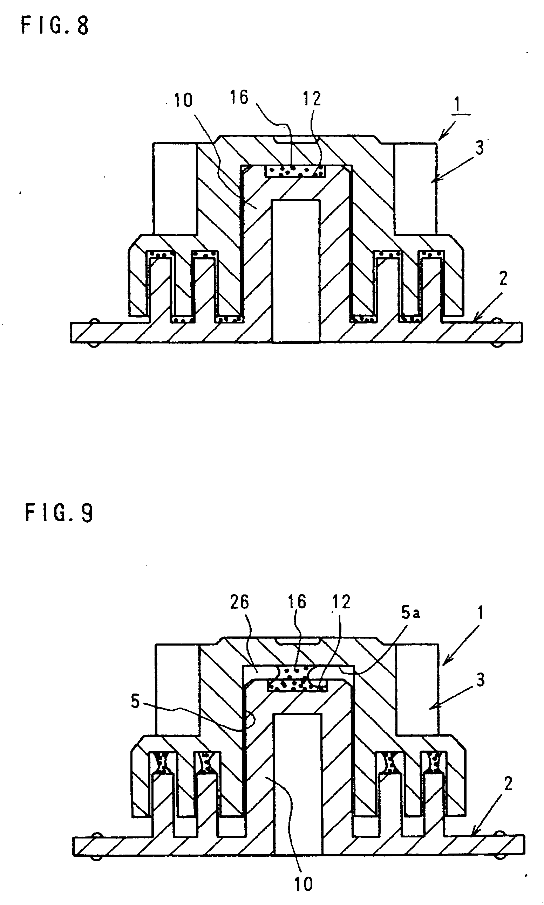

Figs. 8 and 9 show a gear damper 1 in accordance with a second embodiment of the present invention. The gear damper 1 in accordance with the present embodiment illustrated in these drawings corresponds to an aspect in which the engaging convex portion 8 and the engaging recess portion 14 shown in the first embodiment are omitted. In this case, as far as the force applied in a direction of taking out the rotating body 3 from the bracket 2 is not specifically great, this aspect is actually sufficient in a normal case.

That is, as shown in Fig. 9, when the rotating body 3 of the gear damper 1 moves in a direction of being taken out from the bracket 2, the oil 16 charged within the oil reserving recess portion 12 of the front end surface 10a of the supporting shaft 10 is attracted by the bottom surface 5a of the bearing hole 5 so as to be deformed, and the deformation resistance of the oil 16 is applied to the rotating body 3. As a result, it is possible to prevent the rotating body 3 from being taken out from the bracket 2 by the deformation resistance of the oil 16. Further, as shown in Fig. 9, when the rotating body 3 slightly moves in the direction of being taken out from the bracket 2 and the oil 16 within the oil reserving recess portion 12 is deformed, a vacuum area 26 is generated between the bearing hole 5 and the front end surface 10a of the supporting shaft 10. As a result, the rotating body 3 is attracted to the bracket 2 side due to the pressure difference between the outer surface of the rotating body 3 and the vacuum area 26 of the bearing hole 5, whereby it is possible to prevent the rotating body 3 from being taken out from the bracket 2.

### [Third Embodiment]

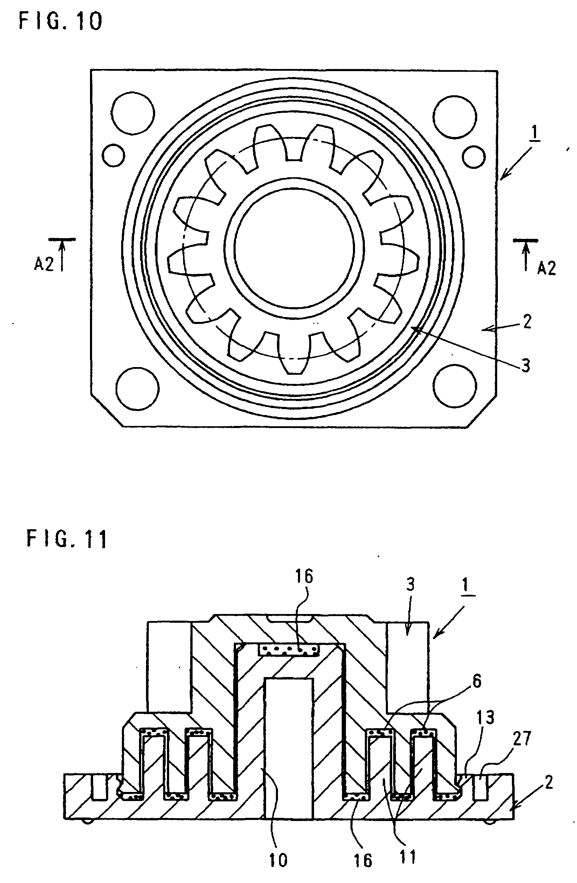

Figs. 10 and 11 show a gear damper 1 in accordance with a third embodiment of the present invention. As shown in these drawings, in the gear damper 1 in accordance with the present embodiment, an annular oil reserving groove 27 having the same axis as that of the supporting shaft 10 is formed in the standing wall 13 of the bracket 2. In accordance with the present embodiment having the structure mentioned above, even when the oil 16 is flown out from the gap between the annular groove 6 of the rotating body 3 and the annular cylinder portion 11 of the bracket 2, it is possible to receive the flowing out oil 16 within the oil reserving groove 27. Accordingly, in accordance with the present embodiment, the periphery of the gear damper 1 is not soiled by the flowing out oil 16.

### [Fourth Embodiment]

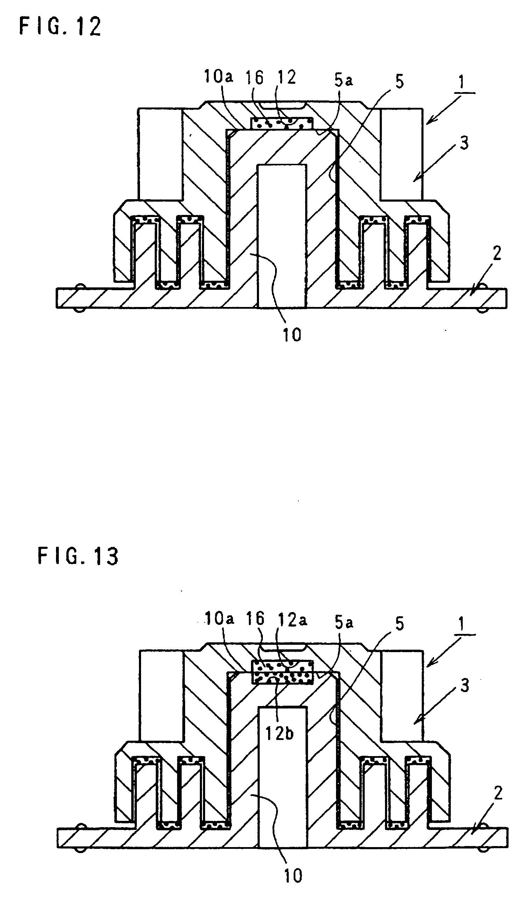

Fig. 12 shows a gear damper 1 in accordance with a fourth embodiment of the present invention. That is, the gear damper 1 in accordance with the present embodiment is structured such that the oil reserving recess portion 12 is formed on the bottom surface 5a of the bearing hole 5 of the rotating body 3 and the oil 16 is received within the oil reserving recess portion 12.

The gear damper 1 having the structure mentioned above can obtain the same operations and effects as those of the second embodiment in which the oil reserving recess portion 12 is formed on the front end surface 10a of the supporting shaft 10 of the bracket 2.

### [Fifth Embodiment]

Fig. 13 shows a gear damper 1 in accordance with a fifth embodiment of the present invention. That is, the gear damper 1 in accordance with the present embodiment is structured such that an oil reserving recess portion 12a is formed on the front end surface 10a of the supporting shaft 10 of the bracket 2, an oil reserving recess portion 12b is formed on a bottom surface 5a of the bearing hole 5 of the rotating body 3 and an oil is received within both of the oil reserving recess portions 12a and 12b.

The gear damper 1 having the structure mentioned above can receive more oil than the gear dampers 1 in accordance with the second and fourth embodiments mentioned above within the oil reserving recess portions 12a and 12b since the oil is received in the oil reserving recess portion 12a in the bracket 2 side and the oil reserving recess portion 12b in the rotating body 3 side as mentioned above. Accordingly, when the rotating body 3 slightly moves in the direction of being taken out from the bracket 2 and the oil 16 within the oil reserving recess portions 12a and 12b is deformed, the vacuum area generated between the bearing hole 4 and the front end surface 10a of the supporting shaft 10 becomes greater than that of the second and fourth embodiments. As a result, the force by which the rotating body 3 is attracted to the bracket 2 side due to the pressure difference between the outer surface of the rotating body 3 and the inner portion of the bearing hole 5 becomes greater than that of the gear damper 1 in accordance with the second and fourth embodiments mentioned above, whereby it is possible to more effectively prevent the rotating body 3 from being taken out from the bracket 2.

### [Sixth Embodiment]

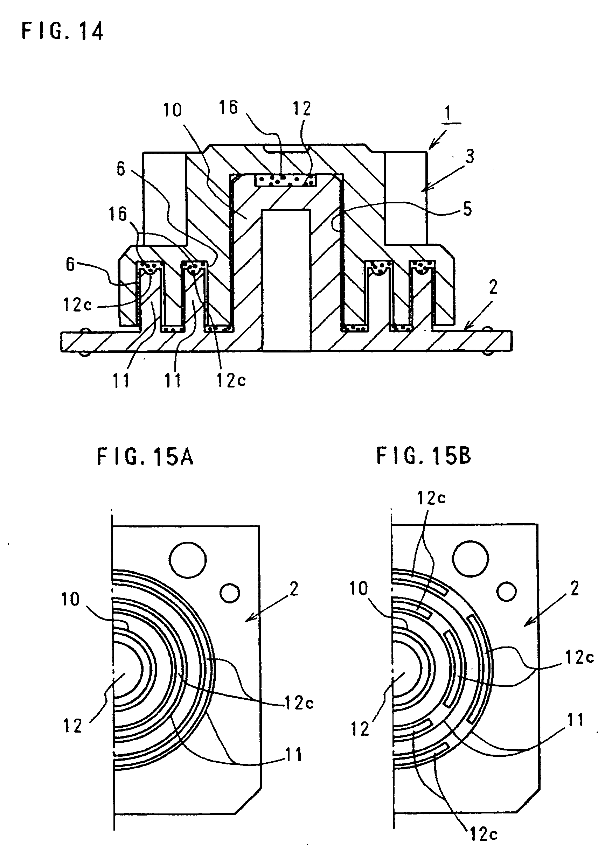

Figs. 14 and 15 show a sixth embodiment in accordance with the present invention. That is, a gear damper 1 in accordance with the present embodiment is structured such that in the second embodiment in which the oil reserving recess portion 12 is formed on the front end surface 10a of the supporting shaft 10 of the bracket 2, an oil reserving recess portion 12c is formed in a front end of the annular cylinder portion 11 of the bracket 2 and a sufficient amount of oil 16 is received within the oil reserving recess portion 12c and between the annular cylinder portion 11 and the annular groove 6.

In this case, the oil reserving recess portion 12c of the annular cylinder portion 11 is annularly formed all around the periphery of the front end surface of the annular cylinder portion 11 as shown in Fig. 15A or a plurality of oil reserving recess portions are arranged in such a manner as to be separated in a peripheral direction of the front end surface of the annular cylinder portion 11 as shown in Fig. 15B.

In accordance with the present invention having the structure mentioned above, when the rotating body 3 slightly moves in a direction of being taken out from the bracket 2, the deformation resistance of the oil 16 within the oil reserving recess portion 12 and the oil 16 within the oil reserving recess portion 12c is applied to the rotating body 3, and the rotating body 3 is attracted to the bracket 2 side by a force greater than the case of the second embodiment mentioned above. Further, the oil within the oil reserving recess portion 12 is supplemented to the gap between the supporting shaft 10 and the bearing hole 5, and the oil within the oil reserving recess portion 12c is supplemented to the gap between the annular cylinder portion 11 and the annular groove 6. As a result, the gear damper securely performs a damper function for a long time.

### [Seventh Embodiment]

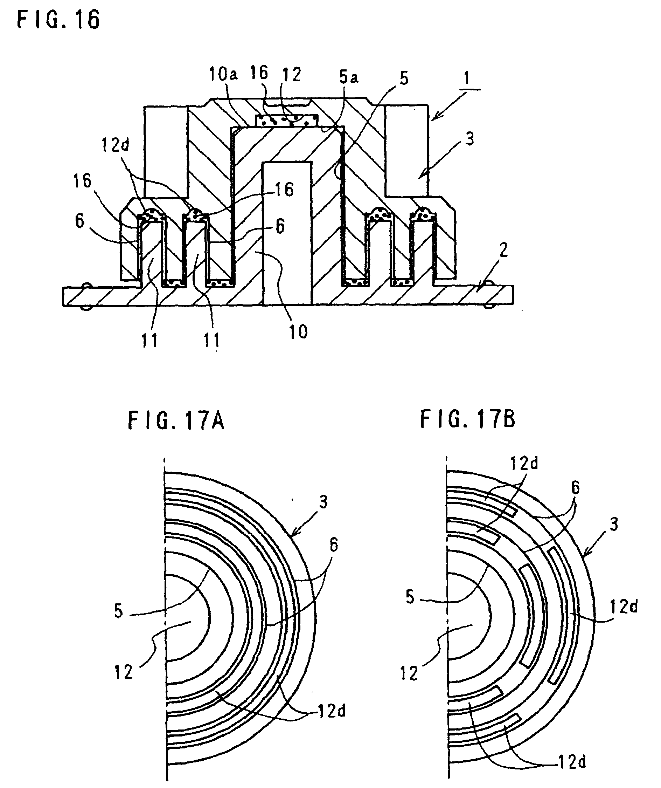

Figs. 16 and 17 show a seventh embodiment in accordance with the present invention. That is, a gear damper 1 in accordance with the present embodiment is structured such that in the fourth embodiment in which the oil reserving recess portion 12 is formed on the bottom surface 5a of the bearing hole 5 of the rotating body 3, an oil reserving recess portion 12d is formed on the bottom surface of the annular groove 6 and a sufficient amount of oil 16 is received in the oil reserving recess portion 12d and between the annular cylinder portion 11 and the annular groove 6.

In this case, the oil reserving recess portion 12d of the annular groove 6 may be annularly formed all around the periphery of the bottom surface of the annular groove 6 as shown in Fig. 17A, or a plurality of oil reserving recess portions 12d may be arranged in such a manner as to be separated in a peripheral direction of the bottom surface of the annular groove 6 as shown in Fig. 17B.

In accordance with the present invention having the structure mentioned above, when the rotating body 3 slightly moves in a direction of being taken out from the bracket 2, the deformation resistance of the oil 16 within the oil reserving recess portion 12 and the oil 16 within the oil reserving recess portion 12d is applied to the rotating body 3, and the rotating body 3 is attracted to the bracket 2 side by a force greater than the case of the fourth embodiment mentioned above. Further, the oil within the oil reserving recess portion 12 is supplemented to the gap between the supporting shaft 10 and the bearing hole 5, and the oil within the oil reserving recess portion 12d is supplemented to the gap between the annular cylinder portion 11 and the annular groove 6. As a result, the gear damper securely performs a damper function for a long time.

### [Eighth Embodiment]

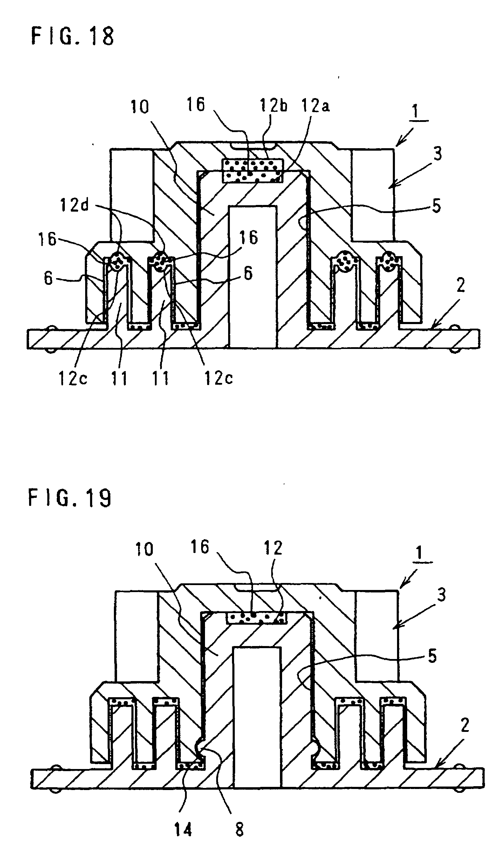

Fig. 18 shows an eighth embodiment in accordance with the present invention. That is, a gear damper 1 in accordance with the present embodiment is structured such that in the fifth embodiment in which the oil reserving recess portion 12a is formed on the front end surface 10a of the supporting shaft 10 of the bracket 2, the oil reserving recess portion 12b is formed on the bottom surface 5a of the bearing hole 5 of the rotating body 3 and the oil is received within both of the oil reserving recess portions 12a and 12b, an oil reserving recess portion 12c is formed on the front end surface of the annular cylinder portion 11, an oil reserving recess portion 12d is formed on the bottom surface of the annular groove 6 and the oil 16 is received in the oil reserving recess portions 12c and 12d.

In accordance with the present invention having the structure mentioned above, when the rotating body 3 slightly moves in a direction of being taken out from the bracket 2, the deformation resistance of the oil 16 within the oil reserving recess portions 12a, 12b, 12c and 12d is applied to the rotating body 3, and the rotating body 3 is attracted to the bracket 2 side by a force greater than the case of the fifth embodiment mentioned above. Further, the oil within the oil reserving recess portions 12a and 12b is supplemented to the gap between the supporting shaft 10 and the bearing hole 5, and the oil within the oil reserving recess portions 12c and 12d is supplemented to the gap between the annular cylinder portion 11 and the annular groove 6. As a result, the gear damper securely performs a damper function for a long time.

### [Ninth Embodiment]

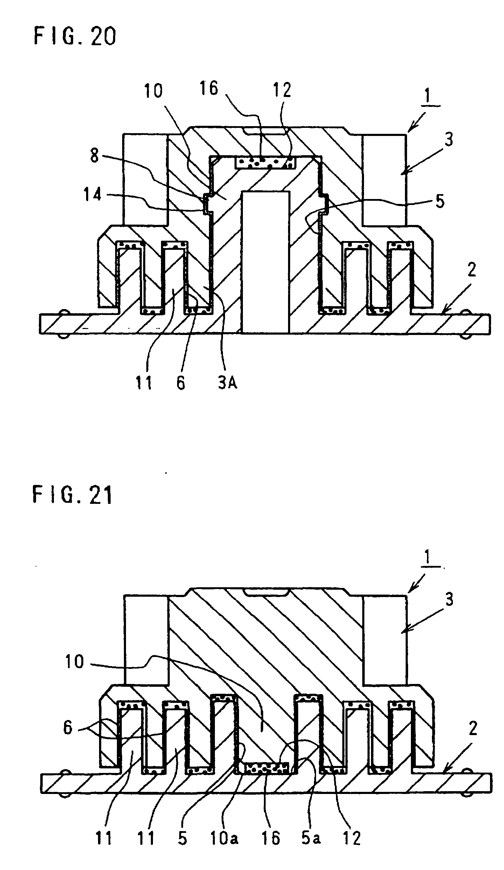

Figs. 19 and 20 show a ninth embodiment in accordance with the present invention. A gear damper 1 illustrated in these drawings is structured such that an engaging convex portion 8 is formed on an outer peripheral surface of the supporting shaft 10 of the bracket 2 and an engaging recess portion 14 engaging with the engaging convex portion 8 is formed on an inner peripheral surface of the bearing hole 5 confronting the engaging convex portion 8. In accordance with the structure mentioned above, the structure can be made simple even when the standing wall 13 as in accordance with the first embodiment mentioned above is not independently formed.

In this case, in the gear damper 1 shown in Fig. 19, since the engaging convex portion 8 is formed in a root portion of the supporting shaft 10 and a distance for moving the engaging convex portion 8 within the bearing hole 5 is reduced at a time of assembling the rotating body 3 in the bracket 2, the rotating body 3 can be easily assembled in the bracket 2 in comparison with the gear damper 1 in Fig. 20 in which the engaging convex portion 8 is formed in the front end side of the supporting shaft 10. On the contrary, in the gear damper 1 shown in Fig. 20, since the structure is made such that the engaging convex portion 8 is formed in the front end side of the supporting shaft 10, the engaging recess portion 14 is formed in the portion having a high rigidity where the annular groove 6 of the rotating body 3 is not formed, and the engaging convex portion 8 is engaged with the engaging recess portion 14, the annular wall 3A is not expanded and deformed due to the engagement between the engaging convex portion 8 and the engaging recess portion 14 and it is possible to maintain the gap between the annular groove 6 and the annular cylinder portion 11 in an optimum state.

In this case, the cross sectional shape of the engaging convex portion 8 and the engaging recess portion 14 is not limited to a circular arc shape as shown in Fig. 19 and a rectangular shape shown in Fig. 20, and an appropriate shape such as a trapezoidal shape, a triangular shape or the like can be selected. Further, the engaging convex portion 8 and the engaging recess portion 14 may be formed in the supporting shaft 10 or the bearing hole 5 so as to form an annular shape, or a plurality of convex and recess portions may be formed in such a manner as to be separated in a circumferential direction. Further, the engaging recess portion 14 may be formed in the supporting shaft 10 and the engaging convex portion 8 may be formed in the bearing hole 5.

### [Other Embodiments]

In this case, in each of the embodiments mentioned above, the structure is made such that the supporting shaft 10 is formed in the bracket 2 and the bearing hole 5 is formed in the rotating body 3, however, the structure is not limited to this, and may be made such that the supporting shaft 10 is formed in the rotating body 3 and the bearing hole 5 is formed in the bracket 2 as shown in Fig. 21. Then, the structure is also made such that the oil reserving recess portion 12 is formed on at least one of the front end surface 10a of the supporting shaft 10 and the bottom surface 5a of the bearing hole 5 and the oil 16 is charged within the oil reserving recess portion 12.

Further, in the sixth to eighth embodiments mentioned above, the cross sectional shape of the oil reserving recess portions 12c and 12d are formed so as to form a circular arc shape, however, the structure is not limited to this and may be formed in a suitable shape such as a rectangular shape, a V shape or the like.

Further, in the sixth embodiment mentioned above, the oil reserving recess portion 12c may be formed in the bottom surface side of the annular groove 6 or the oil reserving recess portion 12c may be formed so as to confront both sides of the front end surface of the annular cylinder portion 11 and the bottom surface of the annular groove 6.

Further, in the seventh embodiment mentioned above, the oil reserving recess portion 12d may be formed in the front end surface side of the annular cylinder portion 11 or the oil reserving recess portion 12d may be formed so as to confront both sides of the front end surface of the annular cylinder portion 11 and the bottom surface of the annular groove 6.

Further, in the eighth embodiment mentioned above, the oil reserving recess portion 12c may be formed only in the annular cylinder portion 11 side or the oil reserving recess portion 12d may be formed only in the annular groove 6 side.

Further, the shape of the engaging convex portion 8 and the annular projection portion 15 is not limited to the aspect of the first embodiment mentioned above, and may be formed in a substantially semicircular cross sectional shape as shown in Fig. 22.

Further, the shape of the engaging convex portion 8 and the annular projection portion 15 may be formed so as to engage the engaging convex portion 8 having a substantially triangular cross sectional shape and formed on the lower end outer periphery of the rotating body 3 with the engaging recess portion 14 having a substantially triangular cross sectional shape and formed on the standing wall 13 of the bracket 2, as shown in Fig. 23.

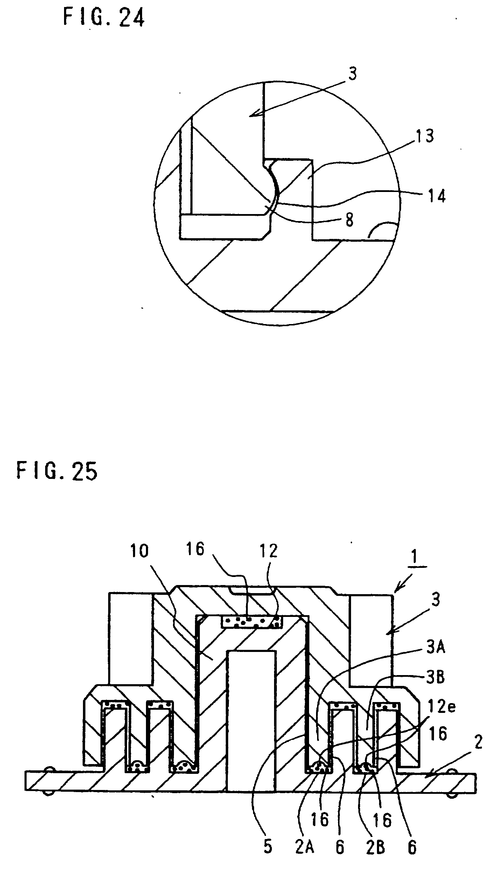

Further, the shape of the engaging convex portion 8 and the annular projection portion 15 may be formed so as to engage the engaging convex portion 8 having a substantially semicircular cross sectional shape and formed on the lower end outer periphery of the rotating body 3 with the engaging recess portion 14 having a substantially semicircular cross sectional shape and formed on the standing wall 13 of the bracket 2, as shown in Fig. 24.

Then, in each of the embodiments, the engaging convex portion 8 may be formed in the standing wall 13 side and the engaging recess portion 14 may be formed in the lower end outer periphery of the rotating body 3. In accordance with the structure mentioned above, in the same manner as that of the first embodiment mentioned above, it is possible to smoothly attach and detach the rotating body 3 with respect to the bracket 2. In this case, the engaging convex portion 8 and the engaging recess portion 14 are not limited to the cross sectional shape in accordance with each of the embodiments, and any shape may be employed as far as it is possible to prevent the rotating body 3 from being taken out from the bracket 2.

Further, in the first embodiment mentioned above, the structure may be made such that the engaging convex portion 8 is formed in one of the confronting surfaces of the annular groove 6 and the annular cylinder portion 11, the engaging recess portion engaging with the engaging convex portion 8 is formed in the other of the confronting surfaces of the annular groove 6 and the annular cylinder portion 11 and the standing wall 13 is omitted. In accordance with the structure mentioned above, the standing wall 13 is not required to be independently formed and the structure is made simple.

Further, in the embodiments mentioned above, the case of applying the gear damper to the cassette tape recorder is exemplified, however, the structure is not limited to this, and the gear damper in accordance with the present invention can be applied to a compact disc player or the other recorded information reproducing apparatus, and further can be applied to various machines and apparatuses provided with the rotating mechanism in addition to the recorded information reproducing apparatus.

Further, in each of the embodiments mentioned above, the spur gear 4 is exemplified as the gear, however, the gear is not limited to this, and when forming a gear (for example, a bevel gear or the like) generating a thrust force in a direction opposite to the direction that the rotating body 3 is taken out from the bracket 2 (a direction of pressing the rotating body 3 to the bracket 2) on the rotating body 3, it is possible to further effectively prevent the rotating body 3 from being taken out from the bracket 2 in addition to the effect obtained by each of the embodiments (the effect of preventing the rotating body 3 from being taken out).

In addition, as shown in Fig. 25, the structure may be made such that an oil reserving recess portion 12e is formed in at least one of a front end surface of an annular cylinder portion 3A positioned between the bearing hole 5 and the annular groove 6 and a bottom surface of an annular groove 2A engaging with the annular cylinder portion 3A, the oil reserving recess portion 12e is formed in at least one of a front end surface of an annular cylinder portion 3B between the annular grooves 6 and a bottom surface of an annular groove 2B engaging with the annular cylinder portion 3B, and the oil is charged within each of the oil reserving recess portions 12e.

As is apparent from the description mentioned above, since the gear damper in accordance with the present invention can apply the deformation resistance of the oil generated at a time when the rotating body slightly moves in a direction of being taken out from the bracket to the rotating body and can apply the attraction force generated by the deformation of the oil to the rotating body, it is possible to prevent the rotating body from being taken out from the bracket. In addition, since the gear damper in accordance with the present invention can supplement the oil charged in the oil reserving recess portion to the gap between the supporting shaft and the bearing hole, the damper function is not deteriorated due to the insufficiency of oil even after being used for a long time.

Further, in the gear damper in accordance with the present invention, since the deformation resistance of the oil within the oil reserving recess portion formed in at least one of the front end surface of the supporting shaft of the bracket and the bottom surface of the bearing hole confronting the front end surface is applied to the rotating body and the deformation resistance of the oil within the oil reserving recess portion formed in at least one of the front end surface of the annular cylinder portion and the bottom surface of the annular groove confronting the front end surface is applied to the rotating body, a force of attracting the rotating body to the bracket side is further increased, so that it is possible to more effectively prevent the rotating body from being taken out. In addition, the gear damper in accordance with the present invention can supplement the oil to the gap between the annular cylinder portion and the annular groove from the oil reserving recess portion formed in at least one of the front end surface of the annular cylinder portion and the bottom surface of the annular groove confronting the front end surface, it is possible to more securely achieve the damper function in addition to the effect of the gear damper in accordance with the first aspect mentioned above.

Further, in the gear damper in accordance with the present invention, in the case of rotatably assembling the rotating body in the bracket by engaging the engaging convex portion formed in one of the outer cylindrical portion and the standing wall with the engaging recess portion formed in the other of the outer cylindrical portion and the standing wall, it is possible to prevent the rotating body from being moved by the engaging portion between the engaging convex portion and the engaging recess portion even when the force is applied in the direction of moving apart from the bracket, so that it is possible to further securely prevent the rotating body from being taken out from the bracket. In addition, in the gear damper in accordance with the present invention, the engaging portion between the engaging convex portion and the engaging recess portion prevents the oil interposed in the gap between the annular groove and the annular cylinder portion, the gap between the bearing hole and the supporting shaft and the oil reserving recess portion from leaking out.

Further, in the gear damper in accordance with the present invention, in the case that the engaging convex portion is formed in one of the confronting surfaces of the annular groove of the rotating body and the annular cylinder portion of the bracket and the engaging recess portion engaging with the engaging convex portion is formed in the other of the confronting surfaces of the annular groove and the annular cylinder portion, it is, of course, possible to prevent the rotating body from being taken out from the bracket, and it is not necessary to independently form the standing wall in the bracket. Accordingly, it is possible to make the whole structure simple.

Further, in the gear damper in accordance with the present invention, in the case that the engaging convex portion is formed in one of the outer peripheral surface of the supporting shaft and the inner peripheral surface of the bearing hole and the engaging recess portion engaging with the engaging convex portion is formed in the other of the outer peripheral surface of the supporting shaft and the inner peripheral surface of the bearing hole, it is, of course, possible to prevent the rotating body from being taken out from the bracket, and it is not necessary to independently form the standing wall in the bracket. Accordingly, it is possible to make the whole structure simple.

Further, in the gear damper in accordance with the present invention, in the case that the oil reserving groove is formed in the outer side of the annular cylinder portion of the bracket, even when the oil charged between the rotating body and the bracket is leaked out to the external portion, it is possible to receive the leaking out oil within the oil reserving groove, so that the periphery of the gear damper is not soiled by the leaking out oil.

Further, the rotating mechanism provided with the gear damper in accordance with the present invention and the recorded information reproducing apparatus provided with the rotating mechanism are securely operated for a long time even after repeatedly used since it is possible to prevent the rotating body from being taken out from the bracket as mentioned above.

## Claims

1. A gear damper comprising a rotating body (3) having a gear (4) formed on an outer periphery thereof and a bracket (2) rotatably supporting the rotating body, wherein a viscosity resistance of an oil (16) interposed between said rotating body and said bracket is applied to said rotating body, wherein
a supporting shaft (10) extending toward one of said rotating body (3) and said bracket (2) is formed in the other thereof,
a cylindrical bearing hole (5) with a bottom engaged with said supporting shaft so as to be relatively rotatable is formed in said one of said rotating body (3) and said bracket (2),
an annular groove (6, 2A, 2B) having the same axis as that of said bearing hole is formed on a surface of one of said rotating body and said bracket confronting the other, and an annular cylinder portion (11, 3A, 3B) engaged with said annular groove so as to be relatively rotatable is formed in the other of said rotating body and said bracket in such a manner as to have the same axis as that of said supporting shaft,
an oil reserving recess portion (12, 12a, 12b) is formed on at least one of a front end surface (10a) of said supporting shaft and a bottom surface (5a) of said bearing hole confronting the front end surface, and
the oil is interposed in a gap (19a, 19b) between said annular groove and said annular cylinder portion, in a gap between said bearing hole and said supporting shaft and in said oil reserving recess portion.

2. A gear damper as claimed in claim 1, **characterized in that** an oil reserving recess portion is formed in at least one of a front end surface of said annular cylinder portion and a bottom surface of said annular groove confronting the front end surface, and an oil is received in the oil reserving recess portion.

3. A gear damper as claimed in claim 1 or 2, **characterized in that** an outer cylindrical portion is formed on an outermost periphery of a surface confronting said bracket of said rotating body in such a manner as to have the same axis as that of said bearing hole, and a standing wall engaged with the outer cylindrical portion in such a manner as to be relatively rotatable is formed on an outer side of the annular cylinder portion of said bracket,
an engaging convex portion is formed in one of said outer cylindrical portion and said standing wall, and an engaging recess portion engaging with the engaging convex portion is formed in the other of said outer cylindrical portion and said standing wall.

4. A gear damper as claimed in claim 1 or 2, **characterized in that** an engaging convex portion is formed in one of said annular groove and a confronting surface of said annular cylinder portion, and an engaging recess portion engaging with the engaging convex portion is formed in the other of said annular groove and the confronting surface of said annular cylinder portion.

5. A gear damper as claimed in claim 1 or 2, **characterized in that** an engaging convex portion is formed in one of an outer peripheral surface of said supporting shaft and an inner peripheral surface of said bearing hole, and an engaging recess portion engaging with the engaging convex portion is formed in the other of the outer peripheral surface of said supporting shaft and the inner peripheral surface of said bearing hole.

6. A gear damper as claimed in claim 1 or 2, **characterized in that** an oil reserving groove is formed in outer side of said annular cylinder portion of said bracket.

7. A gear damper as claimed in any one of claims 1 to 6, **characterized in that** said gear is a spur gear.

8. A gear damper as claimed in any one of claims 1 to 6, **characterized in that** said gear is provided with teeth generating a thrust force for pressing said rotating body toward said bracket side.

9. A rotating mechanism comprising a gear damper as claimed in any one of claims 1 to 8, a rotating member (17) rotatably supported to a fixed side supporting portion (24), lock means (25) for locking the rotating member at a predetermined position, an elastic member (20) for constantly urging said rotating member in a fixed direction, a stopper (21) for restricting an amount of rotation of said rotating member rotated due to an elastic force of the elastic member, and structured such that said bracket is fixed to one of said fixed side supporting portion and said rotating member, and a gear (18) fixed to the other of said fixed side supporting portion and said rotating member and engaging with the gear of said gear damper.

10. A recorded information reproducing apparatus **characterized by** the rotating mechanism (22) as claimed in claim 9 and reproducing means for reproducing recorded information from a recorded medium attached to the rotating member of the rotating mechanism.

## Patentansprüche

1. Zahnraddämpfer mit einem rotierenden Körper (3), an dessen Außenumfang ein Zahnrad (4) gebildet ist, und einem Träger (2), der den rotierenden Körper drehbar lagert, wobei ein Viskositätswiderstand eines zwischen dem rotierenden Körper und dem Träger angeordneten Öls (16) auf den rotierenden Körper aufgebracht wird, wobei
eine Tragwelle (10), die sich in Richtung von entweder dem rotierenden Körper (3) oder dem Träger (2) erstreckt, in dem jeweils anderen der beiden ausgebildet ist,
ein zylindrisches Lagerloch (5) in entweder dem rotierenden Körper (3) oder dem Träger (2) ausgebildet ist, dessen Boden mit der Tragwelle derart in Eingriff steht, dass sie relativ drehbar sind,
eine kreisringförmige Nut (6, 2A, 2B), die die gleiche Achse wie das Lagerloch aufweist, an einer Fläche von entweder dem rotierenden Körper oder dem Träger dem anderen der beiden gegenüberliegend ausgebildet ist, und ein kreisringförmiger Zylinderabschnitt (11, 3A, 3B), der mit der kreisringförmigen Nut derart in Eingriff steht, dass sie relativ drehbar sind, in dem jeweils anderen von dem rotierenden Körper und dem Träger auf eine solche Weise ausgebildet ist, dass er die gleiche Achse wie die Tragwelle aufweist,
ein Ölreserveausnehmungsabschnitt (12, 12a, 12b) an einer vorderen Stirnfläche (10a) der Tragwelle und/oder einer Bodenfläche (5a) des Lagerloches der vorderen Stirnfläche gegenüberliegend ausgebildet ist, und
das Öl in einem Spalt (19a, 19b) zwischen der kreisringförmigen Nut und dem kreisringförmigen Zylinderabschnitt, in einem Spalt zwischen dem Lagerloch und der Tragwelle und in dem Ölreserveausnehmungsabschnitt angeordnet ist.

2. Zahnraddämpfer nach Anspruch 1, **dadurch gekennzeichnet, dass** ein Ölreserveausnehmungsabschnitt in einer vorderen Stirnfläche des kreisringförmigen Zylinderabschnitts und/oder einer Bodenfläche der kreisringförmigen Nut der vorderen Stirnfläche gegenüberliegend ausgebildet ist, und ein Öl in dem Ölreserveausnehmungsabschnitt aufgenommen ist.

3. Zahnraddämpfer nach Anspruch 1 oder 2, **dadurch gekennzeichnet, dass** ein äußerer zylindrischer Abschnitt an einem äußersten Umfang einer Fläche, die dem Träger des rotierenden Körpers gegenüberliegt, auf eine solche Weise ausgebildet ist, dass er die gleiche Achse wie das Lagerloch aufweist, und eine stehende Wand, die mit dem äußeren zylindrischen Abschnitt auf eine solche Weise in Eingriff steht, dass sie relativ drehbar sind, an einer Außenseite des kreisringförmigen Zylinderabschnitts des Trägers ausgebildet ist,
ein konvexer Eingriffsabschnitt in entweder dem äußeren zylindrischen Abschnitt oder der stehenden Wand ausgebildet ist, und ein Eingriffsausnehmungsabschnitt, der mit dem konvexen Eingriffsabschnitt in Eingriff steht, in dem jeweils anderen von dem äußeren zylindrischen Abschnitt und der stehenden Wand ausgebildet ist.

4. Zahnraddämpfer nach Anspruch 1 oder 2, **dadurch gekennzeichnet, dass** der konvexe Eingriffsabschnitt in entweder der kreisringförmigen Nut oder einer gegenüberliegenden Fläche des kreisringförmigen Zylinderabschnittes ausgebildet ist, und ein Eingriffsausnehmungsabschnitt, der mit dem konvexen Eingriffsabschnitt in Eingriff steht, in dem jeweils anderen von der kreisringförmigen Nut und der gegenüberliegenden Fläche des kreisringförmigen Zylinderabschnittes ausgebildet ist.

5. Zahnraddämpfer nach Anspruch 1 oder 2, **dadurch gekennzeichnet, dass** ein konvexer Eingriffsabschnitt in entweder einer äußeren Umfangsfläche der Tragwelle oder einer inneren Umfangsfläche des Lagerloches ausgebildet ist, und ein Eingriffsausnehmungsabschnitt, der mit dem konvexen Eingriffsabschnitt in Eingriff steht, in der jeweils anderen von der äußeren Umfangsfläche der Tragwelle und der inneren Umfangsfläche des Lagerloches ausgebildet ist.

6. Zahnraddämpfer nach Anspruch 1 oder 2, **dadurch gekennzeichnet, dass** eine Ölreservenut in einer Außenseite des kreisringförmigen Zylinderabschnitts des Trägers ausgebildet ist.

7. Zahnraddämpfer nach einem der Ansprüche 1 bis 6, **dadurch gekennzeichnet, dass** das Zahnrad ein Stirnrad ist.

8. Zahnraddämpfer nach einem der Ansprüche 1 bis 6, **dadurch gekennzeichnet, dass** das Zahnrad mit Zähnen versehen ist, die eine Druckkraft erzeugen, um den rotierenden Körper in Richtung der Trägerseite zu pressen.

9. Drehmechanismus, umfassend einen Zahnraddämpfer nach einem der Ansprüche 1 bis 8, ein Drehelement (17), das an einem festen seitlichen Tragabschnitt (24) drehbar gelagert ist, ein Verriegelungsmittel (25) zum Verriegeln des Drehelementes an einer vorbestimmten Position, ein elastisches Element (20) zum beständigen Drängen des Drehelements in einer festen Richtung, und einen Anschlag (21) zum Begrenzen eines Ausmaßes einer Drehung des Drehelements, das aufgrund einer elastischen Kraft des elastischen Elements gedreht wird, und derart aufgebaut, dass der Träger an entweder dem festen seitlichen Tragabschnitt oder dem Drehelement befestigt ist, und ein Zahnrad (18) an dem jeweils anderen von dem festen seitlichen Tragabschnitt und dem Drehelement befestigt ist und mit dem Zahnrad des Zahnraddämpfers in Eingriff steht.

10. Vorrichtung zum Wiedergeben von aufgezeichneter Information, **gekennzeichnet durch** den Drehmechanismus (22) nach Anspruch 9 und **durch** ein Wiedergabemittel zum Wiedergeben von aufgezeichneter Information von einem Aufzeichnungsmedium, das an dem Drehelement des Drehmechanismus angebracht ist.

## Revendications

1. Amortisseur à engrenage comprenant un corps rotatif (3) ayant un engrenage (4) formé sur sa périphérie extérieure, et une platine (2) supportant en rotation le corps rotatif, dans lequel une résistance de viscosité d'une huile (16) interposée entre ledit corps rotatif et ladite platine est appliquée audit corps rotatif, dans lequel :
un arbre de support (10) s'étendant vers l'un des éléments parmi ledit corps rotatif (3) et ladite platine (2) et formé dans l'autre de ces éléments,
un trou formant palier cylindrique (5) avec un fond engagé avec ledit arbre de support de manière à être capable de rotation relative, est formé dans ledit élément parmi le corps rotatif (3) et la platine (2),
une gorge annulaire (6, 2A, 2B) ayant le même axe que celui dudit trou formant palier est formée sur une surface de l'un des éléments parmi ledit corps rotatif et ladite platine qui est en vis-à-vis de l'autre, et une portion cylindrique annulaire (11, 3A, 3B) engagée avec ladite gorge annulaire de manière à être capable de rotation relative est formée dans l'autre des éléments parmi ledit corps rotatif et ladite platine de telle manière qu'elle présente le même axe que celui dudit arbre de support,
une portion évidée formant réserve d'huile (12, 12a, 12b) est formée sur au moins une surface parmi une surface terminale frontale (10a) dudit arbre de support et une surface inférieure (5a) dudit trou formant palier qui est en vis-à-vis de la surface terminale frontale, et
l'huile est interposée dans un intervalle (19a, 19b) entre ladite gorge annulaire et ladite portion cylindrique annulaire, dans un intervalle entre ledit trou formant palier et ledit arbre de support, et dans ladite portion évidée formant réserve d'huile.

2. Amortisseur à engrenage selon la revendication 1, **caractérisé en ce qu'**une partie évidée formant réserve d'huile est formée dans une surface au moins parmi une surface terminale frontale de ladite portion cylindrique annulaire et une surface inférieure de ladite gorge annulaire qui est en vis-à-vis de la surface terminale frontale, et **en ce que** de l'huile est reçue dans la partie évidée formant réserve d'huile.

3. Amortisseur à engrenage selon l'une ou l'autre des revendications 1 et 2, **caractérisé en ce qu'**une portion cylindrique extérieure est formée sur une périphérie extérieure extrême d'une surface qui est confrontée à ladite platine dudit corps rotatif, de manière à présenter le même axe que celui dudit trou formant palier, et une paroi dressée engagée avec la portion cylindrique extérieure de manière à être capable de rotation relative est formée sur un côté extérieur de la portion cylindrique annulaire de ladite platine,
une portion convexe d'engagement est formée dans l'un des éléments parmi ladite portion cylindrique extérieure et ladite paroi dressée, et une portion évidée d'engagement qui est en engagement avec la portion convexe d'engagement est formée dans l'autre des éléments parmi ladite portion cylindrique extérieure et ladite paroi dressée.

4. Amortisseur à engrenage selon l'une ou l'autre des revendications 1 et 2, **caractérisé en ce qu'**une portion convexe d'engagement est formée dans un des éléments parmi ladite gorge annulaire et une surface en vis-à-vis de ladite portion cylindrique annulaire, et **en ce qu'**une portion évidée d'engagement, en engagement avec la portion convexe d'engagement, et formée dans l'autre des éléments parmi ladite gorge annulaire et la surface en vis-à-vis de ladite portion cylindrique annulaire.

5. Amortisseur à engrenage selon l'une ou l'autre des revendications 1 et 2, **caractérisé en ce qu'**une portion convexe d'engagement est formée dans une surface parmi une surface périphérique extérieure dudit arbre de support et une surface périphérique intérieure dudit trou formant palier, et **en ce qu'**une portion évidée d'engagement, en engagement avec la portion convexe d'engagement, et formée dans l'autre surface parmi la surface périphérique extérieure dudit arbre de support et la surface périphérique intérieure dudit trou formant palier.

6. Amortisseur à engrenage selon l'une ou l'autre des revendications 1 et 2, **caractérisé en ce qu'**une gorge formant réserve d'huile est formée dans le côté extérieur de ladite portion cylindrique de ladite platine.

7. Amortisseur à engrenage selon l'une quelconque des revendications 1 à 6, **caractérisé en ce que** ledit engrenage est un engrenage droit.

8. Amortisseur à engrenage selon l'une quelconque des revendications 1 à 6, **caractérisé en ce que** ledit engrenage est doté de dents qui engendrent une force de poussée pour presser ledit corps rotatif vers ledit côté de la platine.

9. Mécanisme rotatif comprenant un amortisseur à engrenage selon l'une quelconque des revendications 1 à 8, un organe rotatif (17) supporté en rotation sur une portion de support du côté fixe (24), des moyens de verrouillage (25) pour verrouiller l'élément rotatif à une position prédéterminée, un élément élastique (20) pour repousser constamment ledit organe rotatif dans une direction fixe, un arrêt (21) pour restreindre l'amplitude de rotation dudit organe rotatif mis en rotation en raison d'une force élastique de l'élément élastique, et structuré de telle façon que ladite platine est fixée à l'un des éléments parmi ladite portion de support du côté fixe et ledit organe rotatif, et un engrenage (18) fixé à l'autre élément parmi ladite portion de support du côté fixe et ledit organe rotatif et en engagement avec l'engrenage dudit amortisseur à engrenage.

10. Appareil de reproduction d'informations enregistrées, **caractérisé par** le mécanisme rotatif (22) selon la revendication 9, et par des moyens de reproduction pour reproduire des informations enregistrées à partir d'un support enregistré attaché à l'élément rotatif du mécanisme rotatif.
